# EUROPÄISCHE PATENTANMELDUNG

(11) **EP 2 386 228 A2**
(43) Veröffentlichungstag der Anmeldung: **16.11.2011**
(21) Anmeldenummer: 10003703.5
(22) Anmeldetag: 06.04.2010
(51) Int. Cl.: A47G 21/04

(54) **Aroma-Löffel**

(30) Priorität: 01.10.2009 DE 202009013083 U
(71) Anmelder: Breidbach, Steffen, 20357 Hamburg (DE)
(72) Erfinder: Breidbach, Steffen, 20357 Hamburg (DE)
(74) Vertreter: Marcus, Matthias

(57) **Zusammenfassung**

Die Erfindung betrifft ein Rührbesteck insbesondere in Form eines Löffels, welcher aus einer oder mehreren gehärteten Massen (1,2,3) besteht, welche sich durch Rühren in Flüssigkeiten (heiß, warm oder kalt) auflösen und diesen dadurch Geschmack, Süße oder Aroma verleihen.

## Beschreibung

**001** Die Erfindung betrifft ein Rührbesteck insbesondere in Form eines Löffels, welcher aus einer oder mehreren gehärteten Massen besteht, welche sich durch Rühren in Flüssigkeiten (heiß, warm oder kalt) auflösen und diesen dadurch Geschmack, Süße oder Aroma verleihen.

**002** Der Konsum von Getränken und flüssigen Lebensmitteln wird zunehmend auch außerhalb der Cafès und Restaurants vollzogen. Kaffee und Tee gibt es immer häufiger "to-go". Gleiches gilt für Suppen. War früher eher eine Reise oder ein Ausflug Anlass für einen solchen mobilen Verzehr, so gehört es heute zum normalen Straßenbild, dass derartige Lebensmittel auch ganz allgemein "Unterwegs" zu sich genommen werden. Auch besteht ein erhöhtes Bedürfnis, diese Lebensmittel schnell und unkompliziert selbst herzustellen - egal ob unterwegs, bei der Arbeit oder Zuhause. Diesem Bedürfnis werden Erfindungen wie Instant-Kaffee, Teebeutel oder sog. "Tütensuppen" gerecht.

Allerdings benötigt man zur Herstellung von solchen Getränken neben dem Wasser und einem Becher ein Rührgerät und die Geschmackssubstanz (Kaffeepulver, Suppenwürze) selbst. Das macht das Ganze - insbesondere Unterwegs - nicht gerade unkompliziert. Wo es Fertigpackungen mit Becher, Geschmackssubstanz und Rührgerät im Handel zu kaufen gibt (etwa im Bereich Instant-Kaffee) entsteht mit der Herstellung eines solchen Getränkes eine nicht zu unterschätzende Menge an Abfall bzw. Verpackungsmüll - zumeist aus Plastik.

Um die Herstellung eines Getränkes oder eines flüssigen Lebensmittels mit einfachen und möglichst wenigen Mitteln und ohne Erzeugung von Abfall zu ermöglichen, müssen die dafür erforderlichen Mittel zusammengefasst werden.

**003** Es ist Aufgabe der Erfindung ein Rührbesteck zu schaffen, dass in Verbindung mit Flüssigkeit ein Getränk oder ein flüssiges Lebensmittel per Instant-Verfahren erzeugen kann und optional zum Verzehr geeignet ist. Auf diese Weise benötigt der Benutzer zur Zubereitungnur ein Gefäß mit heißem, warmen oder auch kalten Getränk oder Wasser. Das sollte das Herstellungsverfahren und den Transport erleichtern und die Herstellungszeit sowie unnötigen Abfall vermindern. Es soll auch Aufgabe der Erfindung sein, bereits vorhandene Getränke oder Flüssige Lebensmittel nachzuaromatisieren oder nachzuwürzen. Und bei der Herstellung und/oder der Aromatisierung soll es möglich sein, die Intensität des Geschmacks individuell zu dosieren, also beispielsweise einen Kaffee mittels der Erfindung stark oder schwach "zu machen" und eine beliebige Menge an Zucker und/oder Milch und/oder eine beliebige Menge Aroma hinzuzufügen.

**004** Gelöst wird diese Aufgabe gemäß der Erfindung des Aroma-Löffels mit den aus den Schutzansprüchen ersichtlichen Merkmalen

**005** Hiernach besteht die Erfindung in einem Rührwerkszeug, beispielsweise in Form eines Löffels, der aus einem oder aus mehreren Teilen besteht, wobei die Teile aus einer gehärteten Masse bestehen. Diese Masse weist eine Mindestwandstärke von 1,2 mm auf und ist dadurch formstabil und somit zum Rühren von Flüssigkeit geeignet. Gleichzeitig enthält bzw. besteht die Masse aus Geschmacks-, Aroma oder Gewürzstoffen. Beispielsweise kann der Löffel ganz oder zum Teil aus Instant-Kaffeepulver und/oder Süß- und Aromastoffen bestehen.
Da die Masse oder die Massen auf Zucker-, Teig oder einer getrockneten Instant-Stoff-Basis bestehen, sind sie in Flüssigkeit (etwa Wasser oder Milch) löslich - insbesondere in warmer oder heißer Flüssigkeit. Wenn das Verhältnis zwischen dem Volumen (in cm³) und der Oberfläche (in cm²) des Rührbestecks mehr als 10:1 beträgt, so löst sich die Masse in Flüssigkeit (kalt, warm, heiß) zeitverzögert aber dennoch rasch auf - etwa binnen 1- 2 ½ Minuten. So dass man das Gerät in dieser Zeit als Rührbesteck zum Umrühren des Getränkes verwenden und die Geschmacksintensität dosieren kann. In dieser Zeit löst sich die Masse in der Flüssigkeit und wird beim Umrühren mit ihr vermischt - alles durch ein und dasselbe Gerät - das angemeldete Rührbesteck.

**006** Das angemeldete Rührbesteck kann beispielsweise als "Kaffeelöffel" hergestellt werden. Dazu besteht der Löffel - ganz oder zum Teil - aus löslichem Kaffeepulver, welcher mit hohem Druck (ausreichend ist etwa eine Tonne) gepresst oder gefriergetrocknet und in die Form eines beliebigen Rührbestecks und insbesondere in Form des Löffels gebracht wird. Optional kann zusätzlich eine Schicht oder ein Element Milchpulver oder "Kaffeeweißer" und/oder Zucker auf die gleiche Weise in die Form eingepresst sein - und zwar "unter" der Kaffee-Schicht oder oberhalb des Rührbestecks, am Stiel beispielsweise. Ein Gefäß mit Flüssigkeit (kalt, warm oder heiß) kann so mittels Rührens (in beliebiger Länge) des angemeldeten Gegenstandes in einen Kaffee mit (optional) Milch und Zucker verwandelt werden - mit einer einzigen Bewegung und ohne das unnötiger Abfall verursacht wird.
Auch können Getränke wie Tee, Kaffee, Milch aromatisiert, gesüßt und veredelt werden, wenn das Rührbesteck - ganz oder zum Teil - aus Aroma- und Süßstoffen besteht und das Getränk damit "umgerührt" wird.
Auch kann die Masse aus gepressten oder gefriergetrockneten Gewürzmischungen oder Brühe bestehen, so dass durch die Verbindung mit beispielsweise heißem Wasser auf einfachste Weise eine Suppe oder eine Brühe gemischt werden kann.

**007** Eine vorteilhafte Ausgestaltung ist der in Anspruch 3 formulierte Umstand, dass die Masse oder die Massen pro Löffel oder pro Rührbesteck so bemessen sind, dass sie zur Herstellung, Aromatisierung oder Würzung einer Portion des beliebigen Getränks oder flüssigen Lebensmittels verwendet werden kann. Das bezieht sich auf eine Maß- oder Bechereinheit, also auf die Größe eines handelsüblichen Bechers - sei es in der "to-go"- oder der traditionellen Variante. Entsprechend wäre die Masse für eine Flüssigkeitsmenge zwischen 0,2 und 0,4 Liter zu bemessen. Die Möglichkeit, die Masse nicht bis zum vollständigen Auflösen zu verwenden und so den Geschmack etc. geringer zu dosieren wurde bereits beschrieben. Aber auch beim vollständigen Auflösen der Masse soll der dadurch erzeugte Geschmack bzw. das Aroma nicht zu intensiv bemessen sein.

**008** Die Erfindung sieht ferner - gemäß Anspruch 4 - die Ausgestaltungs-Varianten vor, dass das Halteelement, Griff oder der Stiel des Rührstücks oder des Löffels ebenfalls aus der Masse besteht aus der das untere Teil (die sog "Löffelschaufel" beispielsweise) besteht oder einer anderen genießbaren Masse, wie vorher beschrieben. Der obere Teil kann aber auch aus einem Teigelement bestehen, welches nach (teilweiser) Auflösung des unteren Geschmacks-Teils zu dem so hergestellten Getränk konsumiert werden kann. So kann der mittels des Instant-Kaffeepulvers hergestellte Kaffee zusammen mit dem aus Keks bestehenden Stiels genossen werden. Dadurch entsteht dann gar kein Abfall mehr und der Gesamt-Genuss des Getränks erhöht sich. Ein solches Masse-Teil kann beispielsweise über einen Aufschiebemechanismus auf die andere Masse (des unteren Teils) aufgeschoben werden und so eine feste Verbindung schaffen. Möglich ist es auch das Halteteil aus einem nicht konsumierbaren aber festen Werkstoff - wie Holz, Kunststoff o.ä. herzustellen. Die konsumierbare Masse kann dann über diesen Stiel geschoben und mit ihm verbunden werden.

**009** Die Erfindung sieht ferner - gemäß Anspruch 5 - die Ausgestaltung vor, dass das Rührbesteck aus einer Süßigkeit besteht, die nicht eine im Anspruch 1-2 beschriebenen Masse besteht sondern aus einem anderen Lebensmittel - etwa eines festen Konfekts oder eines Bonbons, welcher zu dem Getränk konsumiert oder aufbewahrt werden kann. Derartige Lebensmittel weisen üblicherweise die notwendige Festigkeit auf um als stabiler Griff oder Stiel zu fungieren.

**010** Die Erfindung sieht schließlich - gemäß Anspruch 6 - die Ausgestaltung vor, dass der Stiel oder ein Teil mit einer Aufschrift oder einer Prägung versehen werden kann um beispielsweise auf den Hersteller des Löffels oder seine Herkunft bzw. seine Geschmacksrichtung hinzuweisen. Das ermöglicht einen Werbeeffekt, sorgt aber auch für eine Zuordnung der verschiedenen Geschmacks- und Würzrichtungen und damit für eine Unterscheidbarkeit.

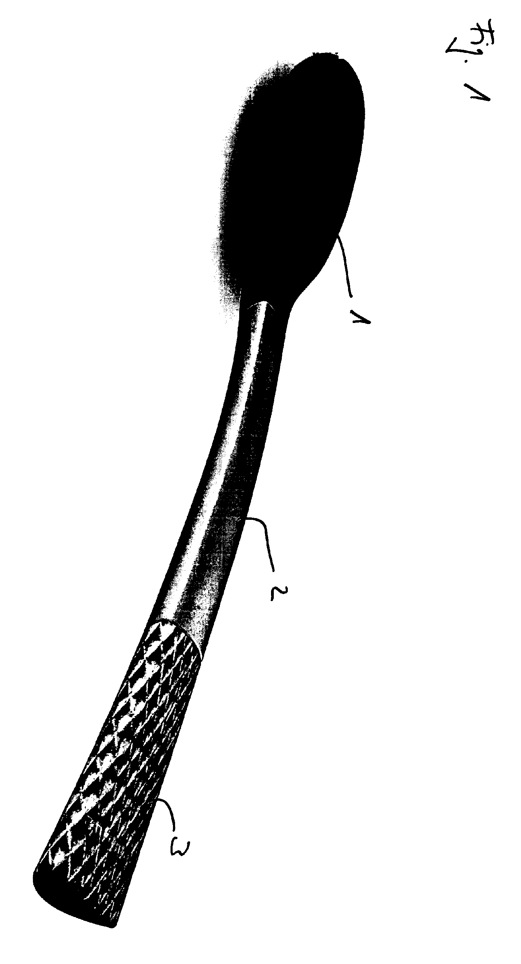

**011** **Fig. 1****:-** Draufsicht: Ansicht der Oberseite des Rührbestecks. In dem Darstellungsbeispiel ist die Löffelform gewählt. Der Löffel besteht - beispielhaft - aus drei verschiedenen Masse-Teilen. Im vorderen Teil (1), dem Löffelschaufel soll in diesem Beispiel eine Instant-Kaffeemasse dargestellt sein. Das Zwischenteil (2) besteht hier in einem Karamell- oder Zuckerteil, der den zubereiteten Kaffee (optional) aromatisieren kann. Am Ende - dem Stiel (3) - ist beispielhaft ein Teig- oder Keks-Teil zu erkennen.

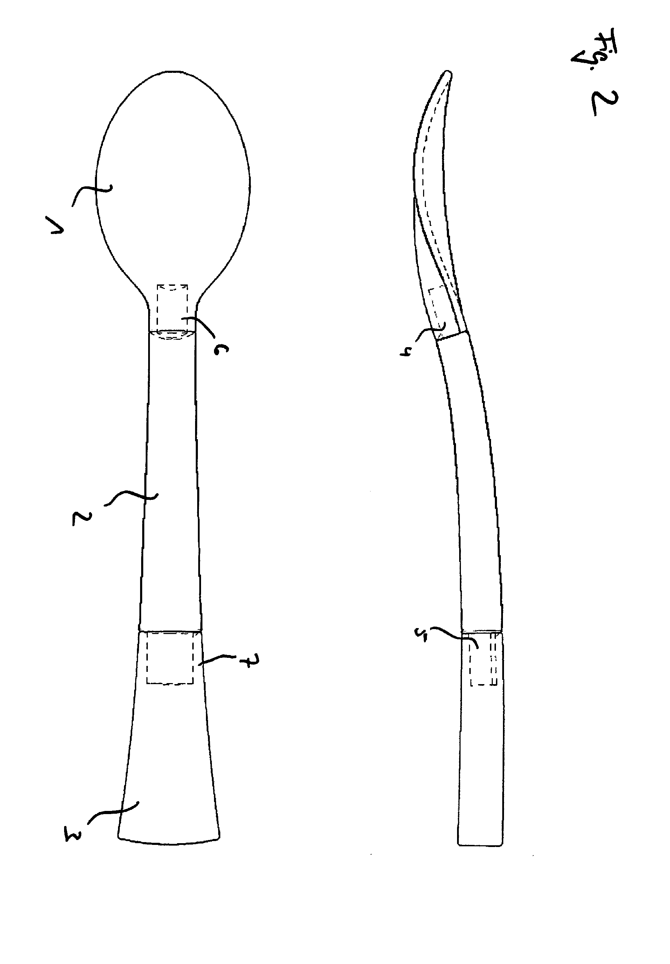

**012** **Fig. 2****-** Seitenansicht (Schnitt): Man erkennt die - beispielhaft gewählten - drei Masse-Elemente, die im Darstellungsbeispiel über ein Stecksystem verbunden sind. Das Mittelteil (2) verfügt hier über zwei Steckteile (4,5) die in die vorgegebenen Aushöhlungen (6,7) im Unterteil (1) und im Oberteil (3) passen und so eine stabile Konstruktion ergeben und eine beliebige Kombination von verschiedenen Geschmäckern (in der Produktion) erlauben.

### Bezugszeichenliste:

- 1: Unterteil / Löffelschaufel
- 2: Zwischen- / Mittelteil
- 3: Endteil / Stiel
- 4: Steckteil zur Verbindung mit dem Unterteil
- 5: Steckteil zur Verbindung mit dem Stiel
- 6: Aushöhlung am Unterteil zur Verbindung mit dem Steckteil
- 7: Aushöhlung am Stiel zur Verbindung mit dem Steckteil

## Patentansprüche

1. Löffel oder sonstiges Rührbesteck für Getränke und flüssige Lebensmittel
**dadurch gekennzeichnet, dass**
1.1 der Löffel oder das Rührbesteck vollständig oder zum Teil aus einer oder mehreren festen und/oder **gehärteten Masse** auf Karamell- Kaffee-, Honig-, Teig-, Gewürz-, Schokoladen- oder Sirupbasis besteht und dabei eine Mindestwandstärke von 1,2 mm aufweist und dadurch formstabil ist,
1.2 wobei die Masse ein flüssigkeits- und/oder temperaturabhängiges Lösungsverhalten aufweist und nach dem Eintauchen in - insbesondere warme oder heiße - Flüssigkeit zeitverzögert auflöst und der Flüssigkeit je nach Dauer des Eintauchens die gewünschte Geschmacks- und/oder Aroma- und/oder Würzintensität verleiht und gleichzeitig während der Auflösphase als Rührbesteck für die mit der aufgelösten Masse vermischte Flüssigkeit fungieren kann; wobei für eine optimale Auflösungsdauer von bis zu 2 1/2 Minuten das Verhältnis der Oberfläche (cm²) des Löffels oder Rührbestecks zu seinem Volumen (cm³) mindestens 10:1 beträgt.

2. Löffel oder Rührbesteck nach Anspruch 1,
**dadurch gekennzeichnet, dass** die Masse oder eine der Massen
2.1 aus gepresstem oder gefriergetrocknetem löslichen Instant-Kaffee und optional aus gepresstem Milchpulver/Kaffeeweißer sowie optional aus einer Schicht und/oder einem Gemisch gepressten Zucker oder Süßungsmittel besteht und durch eine entsprechende Verwendung mit heißem, warmen oder kaltem Wasser eine Instant-Kaffee erzeugt werden kann und/oder
2.2 Stoffe auf Zuckerbasis beinhaltet, die zur Veredelung, Süßung oder Aromatisierung von Getränken insbesondere Kaffeegetränken, Milch oder Tee geeignet sind - wie gepressten und/oder gehärteten Karamell-, Vanille-, Frucht-, Schokolade-, Honig- oder Nussanteilen - werden und /oder
2.3 Gewürze, Brühe oder Würzmischungen beinhaltet, die zur Anreicherung oder Herstellung von flüssigen Lebensmitteln geeignet sind.

3. Löffel oder Rührbesteck nach den vorgehenden Ansprüchen,
**dadurch gekennzeichnet, dass**
die Menge und Intensität der pro Löffel oder Rührbesteck verwendeten Masse so bemessen ist, dass sie zur Aromatisierung oder Herstellung mindestens einer Bechereinheit oder einer Portion eines Getränkes oder flüssigen Lebensmittels geeignet ist.

4. Löffel oder Rührbesteck nach den vorgehenden Ansprüchen,
**dadurch gekennzeichnet, dass**
((er optional zusätzlich zur Masse oder zu den Massen über einen Stiel und/oder eine Halteelement verfügt))
das obere Ende des Stiels, welches als Löffelstiel und/oder Halteelement verwendet wird
4.1 ebenfalls aus der Masse oder eine der Massen besteht und wahlweise vollständig in dem Heißgetränk aufgelöst oder verzehrt werden kann, oder
4.2 aus Teigware besteht und auf welches die Masse aufgetragen oder sonst wie damit verbunden ist und vom Benutzer verzehrt werden kann, oder
4.3 einem separaten Element aus Holz, Kunststoff oder anderem festen Material verbunden ist und auf welches die Masse aufgetragen oder sonst wie damit verbunden ist und dazu dienen kann das Getränk oder das flüssige Lebensmittel zu rühren.

5. Löffel oder Rührbesteck nach den vorgehenden Ansprüchen,
**dadurch gekennzeichnet, dass**
die Masse, die nicht im Getränk aufgelöst wird, als Süßigkeit verspeist werden kann, in Form eines Bonbons, eines Lutschers oder eines Konfekts.

6. Löffel oder Rührbesteck nach den vorgehenden Ansprüchen,
**dadurch gekennzeichnet, dass**
der Stiel oder ein des Stiels zu Werbezwecken mit einer Aufschrift geprägte werden kann und zu diesem Zwecke eine prägefähige Oberflächenstruktur aufweist.
